# EUROPEAN PATENT APPLICATION

(11) **EP 4 528 856 A1**
(43) Date of publication of application: **26.03.2025**
(21) Application number: 22941875.1
(22) Date of filing: 19.05.2022
(51) Int. Cl.: H01M 4/62, H01M 4/13, H01M 4/139, H01M 10/052, H01M 10/0562

(54) **SECONDARY BATTERY**

(71) Applicant: NISSAN MOTOR CO., LTD., Kanagawa 221-0023 (JP); RENAULT S.A.S., 92100 Boulogne-Billancourt (FR)
(72) Inventor: YOSHITOMI, Hiroaki, Atsugi-shi, Kanagawa 243-0123 (JP)
(74) Representative: Grünecker Patent- und Rechtsanwälte PartG mbB
(86) International application number: PCT/IB2022/000287
(87) International publication number: WO 2023/223066

(57) **Abstract**

A means capable of improving the mechanical strength of an electrode active material layer in a secondary battery including an electrode active material layer. A secondary battery including a power generating element including an electrode including a current collector and an electrode active material layer disposed thereon, and a solid electrolyte layer containing a solid electrolyte, and having a rectangular shape consisting of four sides in plan view, is configured so that the electrode active material layer has a binder-oriented active material layer in which a fibrous binder is contained and the orientation rate of the fibrous binder for the direction parallel to one set of sides of the rectangular shape or the direction perpendicular to the set of sides is smaller than 45°.

## Description

### TECHNICAL FIELD

The present invention relates to a secondary battery.

### BACKGROUND ART

In recent years, in order to cope with global warming, reduction of carbon dioxide emissions has been strongly desired. In the automobile industry, expectations have been focused on reduction of carbon dioxide emissions by introduction of electric vehicles (EVs) and hybrid electric vehicles (HEVs), and development of non-aqueous electrolyte secondary batteries such as secondary batteries for motor drive, which are the key to practical application of these, has been actively conducted.

As the secondary battery for motor drive, it has been required to have extremely high output characteristics and high energy as compared with a lithium secondary battery for consumer use used in a mobile phone, a notebook computer, and the like. Therefore, a lithium secondary battery having the highest theoretical energy among all practical batteries has attracted attention and is currently being rapidly developed.

Here, a lithium secondary battery that is currently widely used uses a combustible organic electrolyte solution as an electrolyte. In such a liquid lithium secondary battery, safety measures against liquid leakage, short circuit, overcharge, and the like are more strictly required than other batteries.

Therefore, in recent years, research and development on an all-solid-state lithium secondary battery using an oxide-based or sulfidebased solid electrolyte as an electrolyte have been actively conducted. The solid electrolyte is a material mainly composed of an ion conductor capable of ion conduction in a solid. Therefore, in the all-solid-state lithium secondary battery, various problems caused by a combustible organic electrolyte solution do not occur in principle unlike a conventional liquid lithium secondary battery. Also, in general, when a positive electrode material having a high potential and a large capacity and a negative electrode material having a large capacity are used, significant improvement of the power density and the energy density of the battery can be attempted.

Incidentally, in a general all-solid state-lithium secondary battery, an electrode has a configuration in which an electrode active material layer is disposed on a surface of a current collector. Then, the electrode active material layer further contains, in addition to the electrode active material, a solid electrolyte for improving lithium-ion conductivity in the electrode active material layer, a binder for binding particles of the electrode active material and particles of the solid electrolyte to each other or binding these particles to the current collector, and, as necessary, a conductive aid for improving electron conductivity in the electrode active material layer.

Here, WO 2014/138242 A (JP 2016-513860 W) discloses a technique in which electron nonconductive fibrils or polymer fibrils having a maximum cross-sectional diameter of less than about 1 µm and an aspect ratio of about 10 : 1 or more, such as glucose or cellulose (derivative), are contained in an electrode active material layer in an electrochemical battery such as a lithium secondary battery. According to the disclosure of the publication, it is said that by using the above fibrils, an anisotropic force can be applied without mechanically strengthening an element in an electrochemical battery or causing structural damage or hindrance to the battery, and that the element of the battery can be structurally supported by replacing or supplementing a conventional binder.

### SUMMARY OF INVENTION

### Technical Problem

However, according to the study of the present inventors, it has been found that, even if the technique described in the above publication is adopted, there is a case where the strength of an electrode active material layer of a secondary battery cannot be sufficiently improved, and there is still room for improvement.

Therefore, an object of the present invention is to provide a means capable of further improving the mechanical strength of an electrode active material layer in a secondary battery including an electrode active material layer.

### Solution to Problem

The present inventors have conducted intensive studies in order to solve the above problems. As a result, the present inventors have found that the above problems can be solved by containing a fibrous binder in at least one of electrode active material layers included in a power generating element of a rectangular shape included in a secondary battery, and by configuring so that the fibrous binder is oriented for a direction parallel to one side of the rectangular shape or a direction perpendicular to the side when the electrode active material layer is viewed in plan view, and have completed the present invention.

That is, an aspect of the present invention relates to a secondary battery including a power generating element formed by laminating an electrode including an electrode active material layer containing an electrode active material disposed on a surface of a current collector and a solid electrolyte layer containing a solid electrolyte and having a rectangular shape consisting of four sides in plan view. Then, in the secondary battery, it is characterized in that the electrode active material layer includes at least one binder-oriented active material layer. Here, the binder-oriented active material layer is an active material layer in which a fibrous binder is contained and when the electrode active material layer is viewed in plan view, an orientation rate of the fibrous binder for a direction parallel to one set of opposite sides of the rectangular shape or a direction perpendicular to the opposite sides is smaller than 45°.

### BRIEF DESCRIPTION OF DRAWINGS

Fig. 1 is a perspective view showing an appearance of a flat-laminate type all-solid-state lithium secondary battery according to an embodiment of the present invention.
Fig. 2 is a cross-sectional view taken along line 2-2 shown in Fig. 1.
Fig. 3 is a schematic view for describing a configuration of a positive electrode active material layer of a laminate type secondary battery according to an embodiment of the present invention. Fig. 3(a) is a schematic view of the positive electrode active material layer in plan view, and Fig. 3(b) is a schematic view of a YZ cross section of the positive electrode active material layer.
Fig. 4 is a schematic view showing an example of a branched fibrous binder.
Fig. 5 is a view schematically showing an example of a forming step in an embodiment of production method (I) for producing a positive electrode active material layer.
Fig. 6 is a schematic view showing an example of a state in which a powder composition (electrode mixture) is formed by a forming step of production method (I) to produce a positive electrode active material layer 15.
Fig. 7 is a schematic view showing an example of a state in which a powder composition (electrode mixture) is formed by temporary forming step (a) and forming step (b) of production method (II) to produce a positive electrode active material layer.
Fig. 8 is an explanatory view for describing a method for measuring an angle θ formed by a line segment connecting a start point and an end point of each of a fibrous binder and a fibrous conductive aid with a reference direction in an observation image at the time of measuring an orientation rate.

### DESCRIPTION OF EMBODIMENTS

An aspect of the present invention is a secondary battery including a power generating element formed by laminating an electrode including an electrode active material layer containing an electrode active material disposed on a surface of a current collector and a solid electrolyte layer containing a solid electrolyte, and having a rectangular shape consisting of four sides in plan view, wherein at least one of the electrode active material layers includes a binder-oriented active material layer in which a fibrous binder is contained and when the electrode active material layer is viewed in plan view, an orientation rate of the fibrous binder for a direction parallel to one set of opposite sides of the rectangular shape or a direction perpendicular to the opposite sides is smaller than 45°. According to the present invention, it is possible to further improve the mechanical strength of an electrode active material layer in a secondary battery including an electrode active material layer.

Hereinafter, the embodiment of the present invention described above will be described with reference to the drawings, but the technical scope of the present invention should be determined based on the description of the claims and is not limited only to the following embodiments. Note that dimensional ratios in the drawings are exaggerated for convenience of description and may be different from actual ratios. Hereinafter, the present invention will be described by exemplifying a flat-laminate type (internal parallel connection type) all-solid-state lithium secondary battery (hereinafter, also simply referred to as a "laminate type battery"), which is an embodiment of a secondary battery. However, when viewed in an electrical connection form (electrode structure) inside the secondary battery according to the present embodiment, the present invention can be applied to both a non-bipolar type (internal parallel connection type) battery and a bipolar type (internal series connection type) battery.

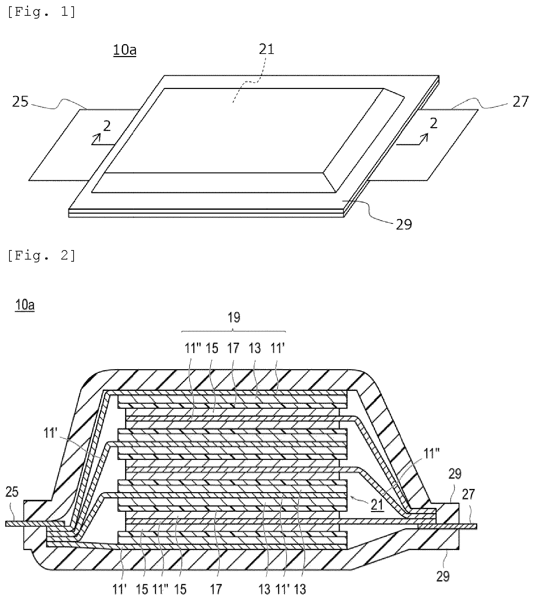

Fig. 1 is a perspective view showing an appearance of a flat-laminate type all-solid-state lithium secondary battery according to an embodiment of the present invention. Fig. 2 is a cross-sectional view taken along line 2-2 shown in Fig. 1.

As shown in Fig. 1, the laminate type battery 10a has a flat rectangular shape, and a negative electrode current collecting plate 25 and a positive electrode current collecting plate 27 for extracting electric power are drawn out from both sides of the laminate type battery 10a. A power generating element 21 is wrapped with a battery outer casing material (laminate film 29) of the laminate type battery 10a, the periphery of the battery outer casing material (laminate film 29) is thermally fused, and the power generating element 21 is sealed in a state where the negative electrode current collecting plate 25 and the positive electrode current collecting plate 27 are drawn to the outside. Incidentally, in the current collecting plates (25, 27) shown in Fig. 1, the negative electrode current collecting plate 25 and the positive electrode current collecting plate 27 may be drawn out from the same side, or the negative electrode current collecting plate 25 and the positive electrode current collecting plate 27 may be divided into a plurality of portions and taken out from the respective sides.

As shown in Fig. 2, the laminate type battery 10a of the present embodiment has a structure in which a power generating element 21 in which a charge-discharge reaction actually proceeds is sealed inside a laminate film 29, which is a battery outer casing material. Here, the power generating element 21 has a flat rectangular shape having four sides. Then, the power generating element 21 has a configuration in which a positive electrode, a solid electrolyte layer 17, and a negative electrode are laminated. The positive electrode has a structure in which a positive electrode active material layer 15 containing a positive electrode active material is disposed on both surfaces of a positive electrode current collector 11". The negative electrode has a structure in which a negative electrode active material layer 13 containing a negative electrode active material is disposed on both surfaces of a negative electrode current collector 11'. Specifically, the positive electrode, the solid electrolyte layer, and the negative electrode are laminated in this order such that one positive electrode active material layer 15 and a negative electrode active material layer 13 adjacent thereto face each other with a solid electrolyte layer 17 interposed therebetween. Thus, the adjacent positive electrode, solid electrolyte layer, and negative electrode constitute one single battery layer 19. Therefore, it can also be said that the laminate type battery 10a shown in Fig. 1 has a configuration in which a plurality of single battery layers 19 are laminated to be electrically connected in parallel. In addition, to the laminate type battery 10a, a restraint pressure is applied in a laminating direction of the power generating element 21 by a restraint member (pressure member) (not shown). Therefore, the volume of the power generating element 21 is kept constant. In the following description, the laminating direction of the power generating element 21 may be referred to as a Z direction, and of directions parallel to a main surface of each layer, a lateral direction and a longitudinal direction of the rectangular shape of the power generating element 21 may be referred to as an X direction and a Y direction, respectively. In addition, in the present specification, "plan view" means XY plan view unless otherwise specified.

To the negative electrode current collector 11' and the positive electrode current collector 11", a negative electrode current collecting plate (tab) 25 and a positive electrode current collecting plate (tab) 27 that are electrically connected to the respective electrodes (positive electrode and negative electrode) are respectively attached, and the negative electrode current collecting plate (tab) 25 and the positive electrode current collecting plate (tab) 27 have a structure in which the negative electrode current collecting plate (tab) 25 and the positive electrode current collecting plate (tab) 27 are led to the outside of the laminate film 29 so as to be sandwiched between ends of the laminate film 29, which is a battery outer casing material. The positive electrode current collecting plate 27 and the negative electrode current collecting plate 25 may be attached to the positive electrode current collector 11" and the negative electrode current collector 11' of each electrode by ultrasonic welding, resistance welding, or the like via a positive electrode lead and a negative electrode lead (not shown), respectively, as necessary.

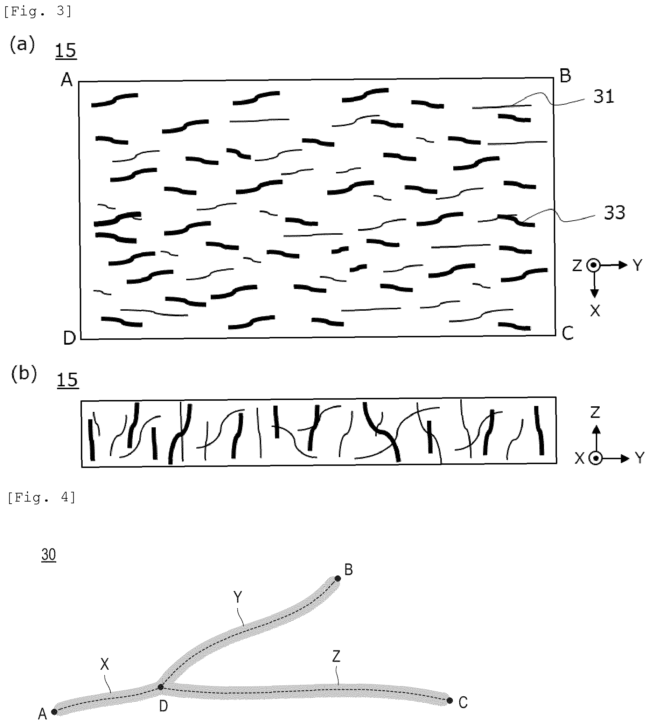

Fig. 3 is a schematic view for describing a configuration of a positive electrode active material layer 15 of a laminate type secondary battery according to an embodiment of the present invention. Fig. 3(a) is a schematic view of the positive electrode active material layer 15 in plan view, and Fig. 3(b) is a schematic view of a YZ cross section of the positive electrode active material layer 15. In the present embodiment, the positive electrode active material layer 15 contains a fibrous binder 31 and a fibrous conductive aid 33 in addition to a positive electrode active material and a solid electrolyte (not shown). Then, as shown in Fig. 3(a), when the positive electrode active material layer 15 is viewed in plan view, both the fibrous binder 31 and the fibrous conductive aid 33 are oriented along the Y direction. Specifically, orientations of the fibrous binder 31 and the fibrous conductive aid 33 are aligned along the Y direction so that an orientation rate for the Y direction described later is smaller than 45°. In addition, as shown in Fig. 3(b), in the YZ cross section of the positive electrode active material layer 15, both the fibrous binder 31 and the fibrous conductive aid 33 are oriented along the Z direction. Specifically, orientations of the fibrous binder 31 and the fibrous conductive aid 33 are aligned along the Z direction so that an orientation rate for the Z direction described later is smaller than 45°. The same applies to an XZ cross section of the positive electrode active material layer 15. Incidentally, in the present specification, an electrode active material layer satisfying the definition of "a fibrous binder is contained and when the active material layer is viewed in plan view, an orientation rate of the fibrous binder for a direction parallel to one set of opposite sides of the rectangular shape of the power generating element or a direction perpendicular to the opposite sides is smaller than 45°" is also referred to as a "binder-oriented active material layer".

In the laminate type secondary battery 10a according to the present embodiment, it is preferable that the power generating element 21 sealed in the laminate film 29 shown in Fig. 1 and the power generating element 21 sealed in the laminate film 29 are sandwiched between two plate-like members and further fastened using a fastening member. Thus, the above plate-like member and the above fastening member function as a pressure member that pressurizes (restrains) the power generating element 21 in the laminating direction thereof. Examples of the plate-like member include a metal plate, a resin plate, and the like. In addition, examples of the fastening member include a bolt, a nut, and the like. However, the pressure member is not particularly limited as long as the pressure member is a member that can pressurize the power generating element 21 in the laminating direction thereof. As the pressure member, typically, a combination of a plate formed of a material having rigidity such as a plate-like member and the above-described fastening member is used. In addition, as the fastening member, not only a bolt and a nut but also a tension plate that fixes an end of the plate-like member so as to restrain the power generating element 21 in the laminating direction thereof and the like may be used. Incidentally, the lower limit of a load applied to the power generating element 21 (restraint pressure in the laminating direction of the power generating element) is, for example, 0.1 MPa or more, preferably 1 MPa or more, more preferably 3 MPa or more, and still more preferably 5 MPa or more. The upper limit of the restraint pressure in the laminating direction of the power generating element is, for example, 100 MPa or less, preferably 70 MPa or less, more preferably 40 MPa or less, and still more preferably 10 MPa or less.

Hereinafter, main components of the above-described laminate type secondary battery 10a will be described.

### [Positive electrode current collector]

The positive electrode current collector is a conductive member that functions as a flow path for electrons emitted from a positive electrode toward an external load or flowing from a power source toward the positive electrode as a battery reaction (charge-discharge reaction) proceeds. The material constituting the positive electrode current collector is not particularly limited. As the constituent material of the positive electrode current collector, for example, a metal or a resin having conductivity can be adopted.

Specific examples of the metal include aluminum, nickel, iron, steel use stainless, titanium, copper, and the like. In addition to these, a clad material of nickel and aluminum, a clad material of copper and aluminum, or the like may be used. In addition, the metal may be a foil in which a metal surface is coated with aluminum. Among them, from the viewpoint of electron conductivity, battery operating potential, and the like, aluminum, steel use stainless, copper, and nickel are preferable.

In addition, examples of the latter resin having conductivity include a resin obtained by adding a conductive filler to a non-conductive polymer material as necessary.

Incidentally, the current collector may have a single-layer structure made of a single material, or may have a laminated structure in which layers made of these materials are appropriately combined. From the viewpoint of weight reduction of the current collector, it is preferable to include at least a conductive resin layer made of a resin having conductivity. In addition, from the viewpoint of blocking the movement of lithium ions between single battery layers, a metal layer may be provided on a part of the current collector.

The thickness of the positive electrode current collector is not particularly limited, and is, for example, 10 to 100 µm.

### [Positive electrode active material layer]

The positive electrode constituting the lithium secondary battery according to the present embodiment has a positive electrode active material layer containing a positive electrode active material capable of occluding and releasing lithium ions.

The positive electrode active material is not particularly limited as long as it is a material capable of releasing lithium ions in a charging process of the secondary battery and occluding lithium ions in a discharging process. An example of such a positive electrode active material includes a material containing an M1 element and an O element, in which the M1 element contains at least one element selected from the group consisting of Li, Mn, Ni, Co, Cr, Fe, and P. Examples of such a positive electrode active material include layered rock salt type active materials such as LiCoO₂, LiMnO₂, LiNiO₂, and Li(Ni-Mn-Co)O₂; spinel type active materials such as LiMn₂O₄ and LiNi_{0.5}Mn_{1.5}O₄; olivine type active materials such as LiFePO₄ and LiMnPO₄; Si-containing active materials such as Li₂FeSiO₄ and Li₂MnSiO₄; and the like. In addition, examples of oxide active materials other than those described above include Li₄Ti₅O₁₂ and LiVO₂. In some cases, two or more types of positive electrode active materials may be used in combination. Incidentally, it is needless to say that a positive electrode active material other than the above may be used.

In a preferred embodiment, the positive electrode active material layer 15 constituting the lithium secondary battery according to the present embodiment contains a layered rock salt type active material containing lithium and cobalt (for example, Li(Ni-Mn-Co)O₂) as a positive electrode active material from the viewpoint of output characteristics.

Examples of the shape of the positive electrode active material include a particulate shape (a spherical shape, a fibrous shape), a thin film shape, and the like. When the positive electrode active material has a particulate shape, the average particle diameter (D₅₀) thereof is, for example, preferably within a range of 1 nm to 100 µm, more preferably within a range of 10 nm to 50 µm, still more preferably within a range of 100 nm to 20 µm, and particularly preferably within a range of 1 to 20 µm. Incidentally, in the present specification, the value of the average particle diameter (D₅₀) of the positive electrode active material can be measured by a laser diffraction scattering method.

The content of the positive electrode active material in the positive electrode active material layer is not particularly limited, and for example, is preferably within a range of 30 to 99% by mass, more preferably within a range of 40 to 90% by mass, and still more preferably within a range of 45 to 80% by mass.

In the lithium secondary battery according to the present embodiment, it is preferable that the positive electrode active material layer 15 further contains a solid electrolyte. Examples of the solid electrolyte include a sulfide solid electrolyte, a resin solid electrolyte, and an oxide solid electrolyte. Incidentally, in the present specification, the solid electrolyte refers to a material mainly composed of an ion conductor capable of ion conduction in a solid, and particularly refers to a material in which lithium ion conductivity at normal temperature (25°C) is 1 × 10⁻⁵ S/cm or more, and the lithium ion conductivity is preferably 1 × 10⁻⁴ S/cm or more. Here, the value of the ion conductivity can be measured by an AC impedance method.

In another preferred embodiment of the secondary battery according to the present embodiment, the solid electrolyte is preferably a sulfide solid electrolyte containing an S element, more preferably a sulfide solid electrolyte containing an Li element, an M element, and an S element, in which the M element contains at least one element selected from the group consisting of P, Si, Ge, Sn, Ti, Zr, Nb, Al, Sb, Br, Cl, and I, and still more preferably a sulfide solid electrolyte containing an S element, an Li element, and a P element, from the viewpoint of exhibiting excellent lithium ion conductivity and being capable of more following a volume change of an electrode active material accompanying charge and discharge.

The sulfide solid electrolyte may have a Li₃PS₄ skeleton, may have a Li₄P₂S₇ skeleton, or may have a Li₄P₂S₆ skeleton. Examples of the sulfide solid electrolyte having a Li₃PS₄ skeleton include LiI-Li₃PS₄, LiI-LiBr-Li₃PS₄, and Li₃PS₄. In addition, examples of the sulfide solid electrolyte having a Li₄P₂S₇ skeleton include a Li-P-S-based solid electrolyte called LPS. In addition, as the sulfide solid electrolyte, for example, LGPS represented by Li₍₄₋ₓ₎Ge₍₁₋ₓ₎PₓS₄ (x satisfies 0 < x < 1) or the like may be used. More specifically, for example, LPS (Li₂S-P₂S₅), Li₇P₃S₁₁, Li_{3.2}P_{0.96}S, Li_{3.25}Ge_{0.25}P_{0.75}S₄, Li₁₀GeP₂S₁₂, or Li₆PS₅X (wherein X is Cl, Br, or I) can be mentioned. Incidentally, the description of "Li₂S-P₂S₅" means a sulfide solid electrolyte obtained using a raw material composition containing Li₂S and P₂S₅, and the same applies to other descriptions. Among them, the sulfide solid electrolyte is preferably selected from the group consisting of LPS (Li₂S-P₂S₅), Li₆PS₅X (wherein X is Cl, Br, or I), Li₇P₃S₁₁, Li_{3.2}P_{0.96}S, and Li₃PS₄ from the viewpoint of having a high ion conductivity and a low volume elastic modulus and thus being capable of more following a volume change of an electrode active material accompanying charge and discharge.

The content of the solid electrolyte in the positive electrode active material layer is not particularly limited, and for example, is preferably within a range of 1 to 70% by mass, more preferably within a range of 10 to 60% by mass, and still more preferably within a range of 20 to 55% by mass.

### (Binder)

It is preferable that the positive electrode active material layer further contains a binder in addition to the positive electrode active material. The type of the binder is not particularly limited, and a conventionally known material can be appropriately adopted as the binder of the electrode active material layer of the secondary battery. Particularly, it is preferable that the binder includes a fibrous binder. In the present specification, the "fibrous binder" refers to a binder mainly composed of fibers in which an aspect ratio is 10 or more and a minimum Feret diameter is 0.2 µm or less in an observation image obtained when a cross section of the positive electrode active material layer is observed using a scanning electron microscope (SEM). Here, the aspect ratio is calculated by dividing the maximum Feret diameter of the binder by the minimum Feret diameter. Incidentally, the maximum Feret diameter is a maximum distance between two parallel straight lines when the outline of the binder is sandwiched between the straight lines, and the minimum Feret diameter is a minimum distance between two parallel straight lines when the outline of the binder is sandwiched between the straight lines. The phrase a certain binder is "mainly composed of" the above fibers means that an area ratio of the above fiber portion to a total area of the binder in an SEM observation image is 50% or more. One fibrous binder can include a portion other than fibers in which an aspect ratio is 10 or more and a minimum Feret diameter is 0.2 µm or less (a portion in which an aspect ratio is less than 10 or a portion in which a minimum Feret diameter is more than 0.2 µm). However, it is essential that the area ratio of the portion other than the fibers to the total area of the fibrous binder in an SEM observation image is less than 50%, and is preferably 20% or less, more preferably 10% or less, and still more preferably 5% or less (the lower limit value is 0%). The fibrous binder includes not only those composed of only one fiber but also those having a configuration in which two or more fibers are connected to each other. Specific examples of the shape of the binder having a configuration in which two or more fibers are connected to each other include a branched shape, a radial shape, a mesh shape, and a shape obtained by combining these shapes. Here, a method for determining the maximum Feret diameter and the minimum Feret diameter in a binder having a configuration in which two or more fibers are connected to each other will be described. Fig. 4 is a schematic view showing an example of a branched fibrous binder. The binder 30 shown in Fig. 4 has a configuration in which fiber X, fiber Y, and fiber Z are connected to each other. Each broken line represents a line connecting the center (1/2 width) of the width of a fiber, and point A, point B, and point C represent ends of each broken line. Incidentally, the ends of each broken line coincide with the ends of the fiber. Point D represents an intersection of three broken lines. That is, the binder 30 shown in Fig. 4 can also be said to have a shape in which fiber X from point A to point D, fiber Y from point B to point D, and fiber Z from point C to point D are bonded at point D. The maximum Feret diameter of fiber X in the binder 30 shown in Figure 4 is defined as a distance from point A to point D. Similarly, the maximum Feret diameter of fiber Y is a distance from point B to point D, and the maximum Feret diameter of fiber Z is a distance from point C to point D. In addition, the minimum Feret diameter of fiber X is a minimum distance between two parallel straight lines when the outline of the binder (fiber) between point A and point D is sandwiched between the straight lines. The same applies to the minimum Feret diameter of fiber Y and fiber Z. In the binder 30 shown in Fig. 4, fiber Y and fiber Z are fibers in which an aspect ratio is 10 or more and a minimum Feret diameter is 0.2 µm or less, but in fiber X, an aspect ratio is less than 10. However, since the area of the fiber X portion in the total area of the binder 30 is less than 50%, it can be said that the binder shown in Fig. 4 is a fibrous binder. The type of the fibrous binder is not particularly limited as long as it has the above shape in the positive electrode active material layer, and a binder that is fibrillated by applying a shear force can be suitably used. As the type of the binder capable of being fibrillated, polytetrafluoroethylene (PTFE), carboxymethyl cellulose, polyvinyl alcohol, and polyethylene are preferable, and polytetrafluoroethylene (PTFE) is more preferable. Regarding the fibrous binder, only one type may be used alone, or two or more types may be used in combination. Incidentally, in the present specification, the description of a compound name for a binder can include not only the compound indicated by the compound name but also a form in which a part of a terminal or side chain is substituted (modified) with another substituent. In the case of the form in which a part of a terminal or side chain is substituted (modified) with another substituent, the proportion of a structural unit in which a terminal or side chain is substituted (modified) with another substituent with respect to 100 mol% of all structural units is preferably 10 mol% or less, and more preferably 5 mol% or less.

Incidentally, when the positive electrode active material layer contains a binder, the positive electrode active material layer may contain a binder other than the fibrous binder (non-fibrous binder). The type of the non-fibrous binder is not particularly limited, and styrene-butadiene rubber (SBR), polyvinylidene fluoride (PVDF), ethyl cellulose, and an acrylic resin are preferable, and polyvinylidene fluoride (PVDF) is more preferable. Regarding the non-fibrous binder, only one type may be used alone, or two or more types may be used in combination. Incidentally, as described above, the above binder can include a form in which a part of a terminal or side chain is substituted (modified) with another substituent. However, the mass ratio of the fibrous binder to the entire binder in the positive electrode active material layer is preferably 50% by mass or more, more preferably 80% by mass or more, still more preferably 90% by mass or more, even more preferably 95% by mass or more, particularly preferably 98% by mass or more, and most preferably 100% by mass.

### (Conductive aid)

It is preferable that the positive electrode active material layer further contains a conductive aid in addition to the positive electrode active material. The electron conductivity of the conductive aid is preferably 1 S/m or more, more preferably 1 × 10² S/m or more, still more preferably 1 × 10⁴ S/m or more, and yet more preferably 1 × 10⁵ S/m or more. The upper limit value of the electron conductivity of the conductive aid is not particularly limited and is usually 1 × 10⁷ S/m or less.

The type of the conductive aid is not particularly limited, and a conventionally known material can be appropriately adopted as the conductive aid of the electrode active material layer of the secondary battery. Particularly, the conductive aid preferably includes a fibrous conductive aid, and more preferably includes fibrous carbon. In the present specification, the "fibrous conductive aid" refers to a conductive aid in which an aspect ratio is 10 or more and a minimum Feret diameter is 0.2 µm or less in an observation image when observed using a scanning electron microscope (SEM). The type of the fibrous carbon is not particularly limited as long as it has the above shape, and examples thereof include carbon fibers (specifically, vapor grown carbon fibers (VGCFs), polyacrylonitrile-based carbon fibers, pitch-based carbon fibers, rayon-based carbon fibers, activated carbon fibers, and the like), graphene, and carbon nanotubes (single-walled carbon nanotubes and multiwalled carbon nanotubes). Among them, carbon fibers are preferable. Regarding the fibrous conductive aid (preferably fibrous carbon), only one type may be used alone, or two or more types may be used in combination.

Incidentally, when the positive electrode active material layer contains a conductive aid, the positive electrode active material layer may contain a conductive aid other than the fibrous conductive aid (non-fibrous conductive aid). The type of the non-fibrous conductive aid is not particularly limited, and examples thereof include, but are not limited to, metals such as aluminum, steel use stainless (SUS), silver, gold, copper, and titanium, alloys containing these metals, or metal oxides; and carbon such as carbon black (specifically, acetylene black, Ketjen black (registered trademark), furnace black, channel black, thermal lamp black, and the like). In addition, a material obtained by coating a periphery of a particulate ceramic material or resin material with the above metal material by plating or the like can also be used as a conductive aid. Regarding the non-fibrous conductive aid, only one type may be used alone, or two or more types may be used in combination. However, when the positive electrode active material layer contains a conductive aid, the mass ratio of the fibrous conductive aid to the entire conductive aid is preferably 50% by mass or more, more preferably 80% by mass or more, still more preferably 90% by mass or more, even more preferably 95% by mass or more, particularly preferably 98% by mass or more, and most preferably 100% by mass.

The thickness of the positive electrode active material layer varies depending on the configuration of the intended lithium secondary battery, and is, for example, preferably within a range of 0.1 to 1000 µm, and more preferably 40 to 100 µm.

### [Solid electrolyte layer]

The solid electrolyte layer is a layer intervening the positive electrode active material layer and the negative electrode current collector and contains a solid electrolyte (usually as a main component). Since a specific form of the solid electrolyte contained in the solid electrolyte layer is the same as that described above, the detailed description thereof is omitted here.

The content of the solid electrolyte in the solid electrolyte layer is, for example, preferably within a range of 10 to 100% by mass, more preferably within a range of 50 to 100% by mass, and still more preferably within a range of 90 to 100% by mass, with respect to a total mass of the solid electrolyte layer.

The solid electrolyte layer may further contain a binder in addition to the solid electrolyte described above.

The thickness of the solid electrolyte layer varies depending on the configuration of the intended lithium secondary battery, and is, for example, preferably within a range of 0.1 to 1000 µm, and more preferably 10 to 40 µm.

### [Negative electrode current collector]

The negative electrode current collector is a conductive member that functions as a flow path for electrons emitted from a negative electrode toward a power source or flowing from an external load toward the negative electrode as a battery reaction (charge-discharge reaction) proceeds. The material constituting the negative electrode current collector is not particularly limited. As the constituent material of the negative electrode current collector, for example, a metal or a resin having conductivity can be adopted. The thickness of the negative electrode current collector is not particularly limited, and is, for example, 10 to 100 µm.

### [Negative electrode active material layer]

The negative electrode active material layer contains a negative electrode active material. The type of the negative electrode active material is not particularly limited, and examples thereof include a carbon material, a metal oxide, and a metal active material. In addition, as the negative electrode active material, a metal containing lithium may be used. Such a negative electrode active material is not particularly limited as long as it is an active material containing lithium, and examples thereof include a lithium-containing alloy in addition to metal lithium. Examples of the lithium-containing alloy include an alloy of Li and at least one of In, Al, Si, Sn, Mg, Au, Ag, and Zn. The negative electrode active material preferably contains metal lithium or a lithium-containing alloy, a silicon-based negative electrode active material, or a tin-based negative electrode active material, and particularly preferably contains metal lithium or a lithium-containing alloy. Incidentally, when the negative electrode active material uses metal lithium or a lithium-containing alloy, the secondary battery according to the present embodiment can be a so-called lithium deposition type in which lithium metal as a negative electrode active material is deposited on a negative electrode current collector in a charging process. Therefore, in such a form, the thickness of the negative electrode active material layer increases with the progress of a charging process, and the thickness of the negative electrode active material layer decreases with the progress of a discharging process. The negative electrode active material layer may not be present at the time of complete discharge, and in some cases, a negative electrode active material layer made of a certain amount of lithium metal may be disposed at the time of complete discharge. Incidentally, when the secondary battery according to the present embodiment is of a lithium deposition type, the negative electrode active material layer does not contain a fibrous binder. Therefore, in the secondary battery having such a configuration, only the positive electrode active material layer can serve as a binder-oriented active material layer.

On the other hand, when the secondary battery is not of a lithium deposition type, it is preferable that the negative electrode active material layer further contains a solid electrolyte, a binder (fibrous binder), and a conductive aid (fibrous conductive aid) in addition to the negative electrode active material, similarly to the positive electrode active material layer described above. Specific examples and preferred forms of these materials are as described above in the section of the positive electrode active material layer.

The content of the negative electrode active material in the negative electrode active material layer is not particularly limited, and for example, is preferably within a range of 40 to 99% by mass, and more preferably within a range of 50 to 90% by mass.

### [Characteristics of electrode active material layer]

In the secondary battery according to the present aspect, the power generating element includes one or a plurality of electrode active material layers (negative electrode active material layers and/or positive electrode active material layers), and in the present aspect, it is characterized in that at least one electrode active material layer is a binder-oriented active material layer as shown in Fig. 3(a). This binder-oriented active material layer may be a positive electrode active material layer or a negative electrode active material layer. As described above, in the binder-oriented active material layer, when the active material layer is viewed in plan view, an orientation rate of the fibrous binder for a direction parallel to one set of opposite sides of the rectangular shape of the power generating element or a direction perpendicular to the opposite sides is smaller than 45°. Therefore, when the electrode active material layer is viewed in plan view, not only a form in which the fibrous binder is oriented along the longitudinal direction of the rectangular shape of the power generating element as shown in Fig. 3(a), but also a form in which the fibrous binder is oriented along the lateral direction of the rectangular shape is also within the scope of the present invention. However, since the deformation amount is larger in the longitudinal direction of the rectangular shape, it is possible to further improve the mechanical strength by orienting the fibrous binder along the longitudinal direction. Incidentally, the value of the orientation rate of the fibrous binder (and the fibrous conductive aid) shall be measured by the method described in the section of Examples described later. In addition, the value of the orientation rate of the fibrous binder in the binder-oriented active material layer is preferably 40° or less, more preferably 35° or less, still more preferably 30° or less, particularly preferably 25° or less, and most preferably 20° or less.

In a preferred embodiment of the secondary battery according to the present aspect, as shown in Fig. 3(b), in a cross section in a thickness direction of the binder-oriented active material layer (here, the positive electrode active material layer 15), the orientation rate of the fibrous binder for the thickness direction of the binder-oriented active material layer is smaller than 45°. With such a configuration, it is possible to improve the mechanical strength in a direction in which the deformation amount is large when stress in a bending direction is applied to a laminate constituting the power generating element. In addition, the value of the orientation rate of the fibrous conductive aid for the thickness direction of the binder-oriented active material layer is preferably 40° or less, more preferably 35° or less, still more preferably 30° or less, particularly preferably 25° or less, and most preferably 20° or less.

In addition, it is preferable that the binder-oriented active material layer further contains the fibrous conductive aid. In addition, in this case, it is more preferable that the orientation rate of the fibrous conductive aid for an orientation direction of the fibrous binder is smaller than 45°. Here, the "orientation direction of the fibrous binder" refers to the "direction parallel to one set of opposite sides or the direction perpendicular to the opposite sides" used as a reference in determining the orientation rate of the fibrous binder when the orientation rate of the fibrous binder for the direction parallel to one set of opposite sides of the rectangular shape of the power generating element or the direction perpendicular to the opposite sides is smaller than 45°. Therefore, in this case, when the binder-oriented active material layer further contains the fibrous conductive aid, it is preferable that the orientation rate of the fibrous conductive aid for the above "direction parallel to one set of opposite sides or the direction perpendicular to the opposite sides" is smaller than 45°. In addition, when the binder-oriented active material layer further contains the fibrous conductive aid in the case where the orientation rate of the fibrous binder for the thickness direction of the binder-oriented active material layer is smaller than 45° in the cross section in the thickness direction of the binder-oriented active material layer, it is preferable that the orientation rate of the fibrous conductive aid for the above "thickness direction of the binder-oriented active material layer" is smaller than 45°. With such a configuration, it becomes possible to further improve the mechanical strength of the electrode active material layer (eventually, the secondary battery). Incidentally, as shown in Fig. 1, it is preferable that a current collecting plate is electrically connected to at least one of one set of opposite sides perpendicular to the orientation direction of the fibrous binder (preferably a positive electrode current collector or a negative electrode current collector constituting the electrode) of the electrode (positive electrode or negative electrode) including the binder-oriented active material layer, and it is more preferable that current collecting plates are connected to both (both ends) of the above set of opposite sides. With such a configuration, there is an advantage that the mechanical strength in the orientation direction of the fibrous binder is improved, and even when an external force (tensile stress or shear stress) is applied in a direction in which the current collecting plate is connected (orientation direction of the fibrous binder), the current collecting plate is less likely to be peeled off from the electrode.

As described above, the power generating element can include a plurality of electrode active material layers, and it is preferable that the power generating element includes two or more binder-oriented active material layers among the plurality of electrode active material layers. When the power generating element includes two or more binder-oriented active material layers, the two or more binder-oriented active material layers may be a positive electrode active material layer and a negative electrode active material layer constituting one single battery layer, may be two or more positive electrode active material layers constituting different single battery layers, may be two or more negative electrode active material layers constituting different single battery layers, or may be a combination of a positive electrode active material layer and a negative electrode active material layer constituting different single battery layers. In any of the embodiments described above, two or more binder-oriented active material layers may be disposed in the power generating element so that orientation directions of the fibrous binders in at least two binder-oriented active material layers coincide with each other, or two or more binder-oriented active material layers may be disposed in the power generating element so that orientation directions of the fibrous binders in at least two binder-oriented active material layers are orthogonal to each other. In any of the embodiments, it is possible to improve the mechanical strength of the secondary battery as an entire cell. Furthermore, when the secondary battery according to the present aspect includes a plurality of single battery layers, there is also an advantage that it is possible to optimally control the mechanical strength of the secondary battery as an entire cell by appropriately adjusting the direction in which each single battery layer is disposed.

### [Method for producing electrode active material layer]

The electrode active material layer (that is, the binder-oriented active material layer) for use in the secondary battery according to an aspect of the present invention described above can be produced by forming an electrode mixture (mixture of constituent materials of the electrode active material layer) in a state of a dry powder composition substantially not containing a liquid component such as a solvent into a sheet shape using a roll press machine. That is, according to another aspect of the present invention, a method for producing an electrode active material layer (binder-oriented active material layer) for use in the secondary battery according to an aspect of the present invention is also provided. This production method is characterized by including a forming step of supplying a powder composition (electrode mixture) containing an electrode active material (positive electrode active material or negative electrode active material), a solid electrolyte, and a fibrous binder (and a conductive aid (preferably a fibrous conductive aid) as necessary) to a roll press machine, and performing a rolling treatment on the powder composition using the roll press machine to form the powder composition into a sheet shape, thus obtaining the electrode active material layer. According to this production method, an electrode active material layer for use in the secondary battery according to an aspect of the present invention is obtained. In other words, the electrode active material layer obtained by this production method is a binder-oriented active material layer. Incidentally, this production method is also referred to as "production method (I)".

Further, a method for producing an active material layer in which the fibrous binder is oriented along the Z direction in the YZ cross section of the electrode active material layer as shown in Fig. 3(b) in addition to the fibrous binder being oriented in the X direction or the Y direction of the electrode active material layer, among the electrode active material layers according to the present aspect, is also provided as still another aspect of the present invention. That is, the production method includes a temporary forming step of performing a spreading treatment on a powder composition (electrode mixture) containing an electrode active material (positive electrode active material or negative electrode active material), a solid electrolyte, and a fibrous binder (and a conductive aid (preferably a fibrous conductive aid) as necessary) to obtain a temporary formed body in which the fibrous binder is oriented, and a forming step of supplying the temporary formed body to a roll press machine, and performing a rolling treatment on the temporary formed body using the roll press machine to form the temporary formed body into a sheet shape, thus obtaining the electrode active material layer. Then, in the production method, it is characterized in that the temporary formed body is supplied to the roll press machine so that a direction of an orientation of the fibrous binder in the temporary formed body (a direction of the stretch in the spreading treatment) is substantially the same as a thickness direction of the electrode active material layer. According to this production method, among the electrode active material layers for use in the secondary battery according to an aspect of the present invention, an electrode active material layer in which the fibrous binder is oriented in the X direction or the Y direction of the electrode active material layer and oriented along the Z direction in the YZ cross section of the electrode active material layer is obtained. Incidentally, this production method is also referred to as "production method (II)".

Incidentally, in the present specification, the "roll press machine" is a machine including at least a pair of cylindrical pressure rolls disposed in parallel with each other with outer peripheral surfaces facing each other, and a rotation drive mechanism of the above rolls, in which the above-described powder composition (electrode mixture) is sandwiched between the above pair of rolls and rolled into a sheet shape. The material and size of the roll, the manner of the rotation mechanism, the disposition of the above roll and the above rotation mechanism, and the like are not particularly limited. In addition, the direction in which the electrode active material layer is discharged from between the above pair of rolls is not particularly limited and may be a horizontal direction or a downward direction.

Here, first, a powder composition (electrode mixture) used as a raw material in both production method (I) and production method (II) will be described. This powder composition essentially contains an electrode active material (positive electrode active material or negative electrode active material), a solid electrolyte, and a fibrous binder. In addition, the powder composition may contain a conductive aid as necessary, and when the powder composition contains a conductive aid, it is preferable that the conductive aid is a fibrous conductive aid.

The "powder composition" means a mixture composed of a solid content in a state of substantially not containing a liquid component such as a solvent. Incidentally, the content of the liquid component in the powder composition is preferably 5% by mass or less, more preferably 3% by mass or less, still more preferably 1% by mass or less, yet more preferably 0.5% by mass or less, particularly preferably 0.1% by mass or less, and most preferably 0% by mass, with respect to 100% by mass of the powder composition.

The method for obtaining the powder composition is not particularly limited, and respective components constituting the powder composition may be added in any order and mixed. The mixing means at this time is not particularly limited, and a method using a mixing means such as a conventionally known mortar, mixer, or mill can be appropriately adopted. Here, the method for blending a fibrous binder into the powder mixture is not particularly limited, and a fibrous binder may be separately prepared and mixed with other components. In addition, a fibrous binder may be generated in the powder composition by, when a binder capable of being fibrillated, which is a precursor of a fibrous binder, is mixed with other components, applying a shear force to the binder capable of being fibrillated to be fibrillated.

### (Production method (I))

In the production method (I), a powder composition (electrode mixture) containing an electrode active material (positive electrode active material or negative electrode active material), a solid electrolyte, and a fibrous binder (and a conductive aid (preferably a fibrous conductive aid) as necessary) is supplied to a roll press machine, and a rolling treatment is performed on the powder composition using the roll press machine to form the powder composition into a sheet shape. Thus, an electrode active material layer (binder-oriented active material layer) for use in the secondary battery according to an aspect of the present invention is obtained.

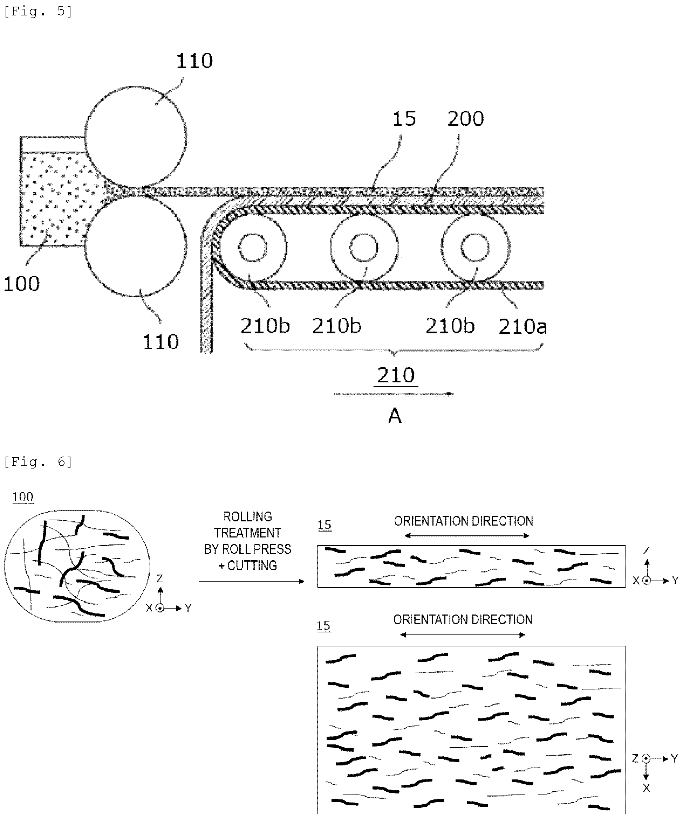

Fig. 5 is a view schematically showing an example of a forming step in an embodiment of production method (I) for producing a positive electrode active material layer 15. Further, Fig. 6 is a schematic view showing an example of a state in which a powder composition (electrode mixture) 100 is formed by a forming step of production method (I) to produce a positive electrode active material layer 15.

As shown in Fig. 5, in the forming step of production method (I), a powder composition (electrode mixture) 100 is supplied to a roll press machine, and using the roll press machine (specifically, by compressing by a roll 110 of the roll press machine), a rolling treatment is performed on the powder composition (electrode mixture) 100 to form the powder composition (electrode mixture) into a sheet shape. At this time, a plurality of times of the rolling treatment can be performed as necessary until a sheet having a desired thickness is obtained. The powder composition (electrode mixture) 100 formed into a sheet shape becomes a positive electrode active material layer 15 and is discharged in the horizontal direction and then laminated on a surface of a base material 200. Incidentally, the direction in which the powder composition (electrode mixture) formed into a sheet shape in the forming step is discharged is not particularly limited, and the positive electrode active material layer 15 may be discharged, for example, in a vertical direction.

The base material 200 may be moved in one direction according to a speed at which the powder composition (electrode mixture) 100 is formed. The means for moving the base material 200 in one direction is not particularly limited, and as shown in Fig. 5, the base material 200 may be moved in one direction (direction indicated by arrow A in Fig. 5) by a base material conveyance unit 210 including a placement portion 210a and a drive portion 210b. In addition, when the base material 200 itself has sufficient mechanical strength, the base material 200 may be moved in one direction by a method such as directly disposing the base material 200 on the drive portion 210b without providing the placement portion 210a.

In production method (I), it is preferable that a linear pressure applied to the powder composition (electrode mixture) by the roll press machine is 35 to 3500 N/cm. Incidentally, the linear pressure applied to the powder composition (electrode mixture) by the roll press machine means a linear pressure calculated from a load obtained by a load cell attached to the roll press machine and an electrode width after pressing. The interval between the rolls of the roll press machine is not particularly limited and is preferably 100 to 1000 µm from the viewpoint of the linear pressure applied to the powder composition (electrode mixture) and from the viewpoint of adjusting the film thickness of the electrode active material layer. In addition, the rotation speed of the roll of the roll press machine is not particularly limited and is preferably 1 to 20 m/min from the viewpoint of maintaining a sufficient press holding time.

According to the production method (I), since the electrode active material layer can be obtained by a simple operation of forming the powder composition (electrode mixture) containing an electrode active material with the roll press machine, forming errors are less likely to occur, and the yield is high. In addition, a shear force in a flow direction of the roll press can be applied to the fibrous binder contained in the powder composition during forming. As a result, as shown in Fig. 6, the fibrous binder (and the fibrous conductive aid added as necessary) having a random orientation in a state of the powder composition (electrode mixture) 100 is oriented in the flow direction (Y direction shown in Fig. 6) of the roll press in plan view of the electrode active material layer (positive electrode active material layer 15 in Fig. 6) obtained through the forming step. Therefore, by cutting the continuous sheet-shaped electrode active material layer thus obtained so that the orientation direction of the fibrous binder is the direction parallel to one set of opposite sides of the rectangular shape or the direction perpendicular to the opposite sides, it is possible to obtain an electrode active material layer for use in the secondary battery according to an embodiment of the present invention.

### (Production method (II))

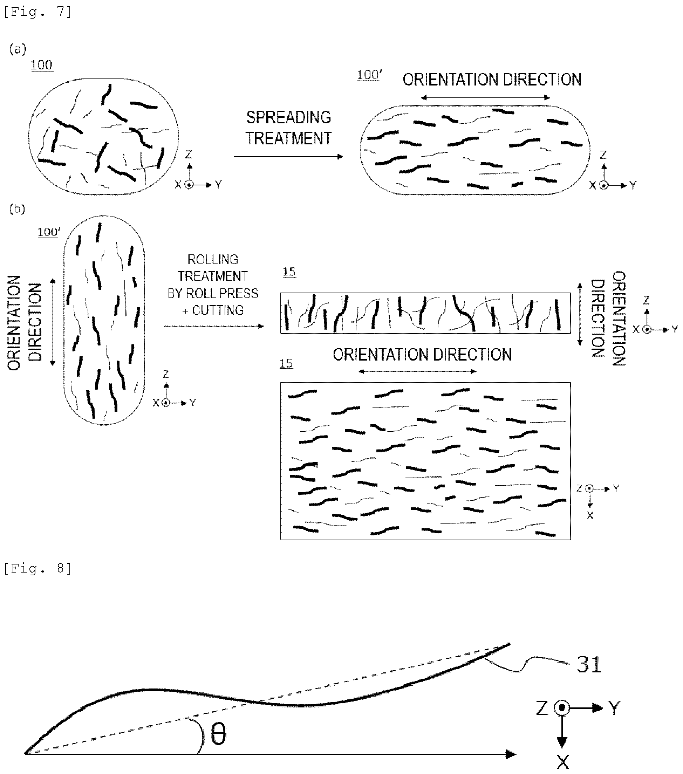

Fig. 7 is a schematic view showing an example of a state in which a powder composition (electrode mixture) 100 is formed by temporary forming step (a) and forming step (b) of production method (II) to produce a positive electrode active material layer 15.

As shown in Fig. 7(a), in the production method (II), without performing a rolling treatment using a roll press machine on a powder composition (electrode mixture) 100 in which a fibrous binder is randomly oriented, a spreading treatment is performed on the powder composition (electrode mixture) 100 so that the fibrous binder is oriented at a certain degree. At this time, it is preferable to subject a kneaded product obtained by subjecting the powder composition (electrode mixture) to a treatment such as crushing, dispersion, or kneading to the spreading treatment. Thus, a temporary formed body 100' is obtained. In the temporary formed body 100', the fibrous binder (and the fibrous conductive aid added as necessary) does not exhibit random orientation and may exhibit a certain degree of orientation. The specific method of such a spreading treatment is not particularly limited, and various conventionally known methods for applying the spreading treatment to the powder composition (for example, in addition to a roll press, an extruder or the like) can be appropriately adopted.

Subsequently, in the production method (II), the temporary formed body 100' obtained in the above-described temporary forming step (a) is supplied to a roll press machine (see Fig. 5), and using the roll press machine (specifically, by compressing by a roll 110 of the roll press machine), a rolling treatment is performed on the temporary formed body 100' to form the temporary formed body 100' into a sheet shape. At this time, a plurality of times of the rolling treatment can be performed as necessary until a sheet having a desired thickness is obtained. The powder composition (electrode mixture) 100 formed into a sheet shape becomes a positive electrode active material layer 15 as shown in Fig. 7 and is discharged in the horizontal direction and then laminated on a surface of a base material 200.

Here, in forming step (b) of the production method (II), the temporary formed body 100' is supplied to the roll press machine so that a direction of an orientation of the fibrous binder in the temporary formed body 100' supplied to the roll press machine (Z direction shown in Fig. 7(b)) is substantially the same as a thickness direction of the electrode active material layer (positive electrode active material layer 15 in Fig. 7(b)) to be obtained. According to such a configuration, as shown in Fig. 7(b), the orientation of the fibrous binder (and the fibrous conductive aid added as necessary) (orientation in the Z direction shown in Fig. 7(b)) is maintained also in a cross section in the thickness direction of the electrode active material layer (positive electrode active material layer 15 in Fig. 7) obtained through the forming step, and is oriented in the thickness direction in the cross section in the thickness direction of the electrode active material layer (positive electrode active material layer 15). This is because the orientation of the fibrous binder in the temporary formed body 100' is aligned to some extent in the thickness direction of the electrode active material layer (positive electrode active material layer 15). On the other hand, the fibrous binder (and the fibrous conductive aid added as necessary) is oriented in the flow direction (Y direction shown in Fig. 7(b)) of the roll press in plan view of the electrode active material layer (positive electrode active material layer 15). Therefore, by cutting the continuous sheet-shaped electrode active material layer thus obtained so that the orientation direction of the fibrous binder is the direction parallel to one set of opposite sides of the rectangular shape or the direction perpendicular to the opposite sides, it is also possible to obtain an electrode active material layer for use in the secondary battery according to an aspect of the present invention.

### [Positive electrode current collecting plate and negative electrode current collecting plate]

A material constituting the current collecting plates (25, 27) is not particularly limited, and a known highly conductive material conventionally used as a current collecting plate for a secondary battery can be used. As the constituent material of the current collecting plate, for example, a metal material such as aluminum, carbon-coated aluminum, copper, titanium, nickel, steel use stainless (SUS), or an alloy thereof is preferable. From the viewpoint of lightweight, corrosion resistance, and high conductivity, aluminum and copper are more preferable, and aluminum is particularly preferable. Incidentally, for the negative electrode current collecting plate 25 and the positive electrode current collecting plate 27, the same material may be used or different materials may be used.

### [Positive electrode lead and negative electrode lead]

In addition, although not shown, the current collectors (11", 11') and the current collecting plates (27, 25) may be electrically connected via a positive electrode lead or a negative electrode lead. As the constituent material of the positive electrode and negative electrode leads, a material used in a known lithium secondary battery can be similarly adopted. Incidentally, it is preferable that a portion taken out from an outer casing is covered with a heat resistant and insulating heat shrinkable tube or the like so as not to affect a product (for example, automotive components, in particular electronic devices, and the like) due to electric leakage or the like caused by contact with peripheral equipment, wiring, or the like.

### [Battery outer casing body]

As the battery outer casing body, a known metal can case can be used, and a bag-shaped case using a laminate film 29 containing aluminum, which can cover a power generating element as shown in Fig. 1, can be used. As the laminate film, for example, a laminate film having a three-layer structure formed by laminating PP, aluminum, and nylon in this order can be used, but the laminate film is not limited thereto. From the viewpoint of high output and excellent cooling performance and being able to be suitably used for batteries for large devices for EV and HEV, a laminate film is desirable. In addition, since a group pressure applied to the power generating element from the outside can be easily adjusted, the outer casing body is more preferably a laminate film containing aluminum.

Although the case where the secondary battery according to the present embodiment is an all-solid state lithium secondary battery has been described as an example, the lithium secondary battery according to the present embodiment may not be an all-solid-state type. That is, the solid electrolyte layer may further contain a conventionally known liquid electrolyte (electrolyte solution). The amount of the liquid electrolyte (electrolyte solution) that can be contained in the solid electrolyte layer is not particularly limited and is preferably such an amount that the shape of the solid electrolyte layer formed by the solid electrolyte is maintained and liquid leakage of the liquid electrolyte (electrolyte solution) does not occur. Incidentally, as the liquid electrolyte (electrolyte solution), a solution having a form in which a conventionally known lithium salt is dissolved in a conventionally known organic solvent is used. The liquid electrolyte (electrolyte solution) may further contain an additive other than the organic solvent and the lithium salt. Regarding these additives, only one type may be used alone, or two or more types may be used in combination. In addition, when an additive is used in the electrolyte solution, the amount of the additive can be appropriately adjusted.

### Examples

Hereinafter, the present invention will be described in more detail with reference to Examples. However, the technical scope of the present invention is not limited only to the following Examples. Incidentally, in the following, instruments, apparatuses, and the like used in a glove box were sufficiently dried in advance.

### <Production Example of positive electrode active material layer>

### [Example 1]

A positive electrode for an all-solid-state lithium secondary battery was produced by the following method.

First, as constituent materials of a positive electrode active material layer, an NMC composite oxide (LiNi_{0.8}Mn_{0.1}Co_{0.1}O₂, average particle diameter (D50): 1 µm) as a positive electrode active material, an argyrodite type sulfide solid electrolyte (Li₆PS₅Cl, average particle diameter (D50): 0.2 µm) as a solid electrolyte, carbon nanofibers (CNFs) (VGCF (registered trademark) manufactured by Showa Denko K. K., aspect ratio: 60, average fiber diameter: about 150 nm, average fiber length: about 9 µm) as a fibrous conductive aid, and polytetrafluoroethylene (PTFE) as a binder capable of being fibrillated were prepared. In a glove box in an argon atmosphere with a dew point of -68°C or lower, a predetermined amount of each of the positive electrode active material, the solid electrolyte, and the conductive aid prepared above was kneaded using an agate mortar to obtain a uniform mixture. Subsequently, a predetermined amount of PTFE was added to the mixture, and the mixture was further kneaded using an agate mortar to obtain a dry powder composition (mixture for positive electrode formation) not containing a solvent. The appearance of the mixture thus obtained was like a dough of Japanese wheat noodles. Incidentally, the blending ratio of the respective components in the mixture was set to 79 : 16 : 3 : 2 (mass ratio of positive electrode active material : solid electrolyte : fibrous conductive aid : binder).

Thereafter, after confirming that PTFE was fibrillated and formed into a fibrous shape by kneading, the obtained powder composition (mixture for positive electrode formation) was supplied to a powder inlet set in a roll press machine. Then, a rolling treatment was performed on the powder composition using the roll press machine (conditions are shown below) to form the powder composition into a sheet shape.

### (Conditions of roll press machine)

- Roll size: 250 mmϕ × 400 mm
- Roll rotation speed: 1 m/min
- Interval between rolls (gap): 100 µm
- Pressure: 10 kN (linear pressure: 25 kN/m).

Next, the sheet was punched into a rectangular shape of 19 mm square so that one set of opposite sides was parallel to a direction of the rolling treatment by the roll press machine to obtain a positive electrode active material layer of this Example. Incidentally, the positive electrode active material layer thus obtained was firmly hardened to such an extent that the shape was not broken even when the positive electrode active material layer was placed on a glass plate and moved. In addition, the thickness of the positive electrode active material layer (measured with a micrometer) was 80 µm and uniform and had a smooth surface.

### [Comparative Example 1]

A powder composition (mixture for positive electrode formation) was obtained by the same method as in Example 1 described above.

Thereafter, after confirming that PTFE was fibrillated and formed into a fibrous shape by kneading, the obtained powder composition (mixture for positive electrode formation) was formed into a sheet shape using a hand roller. Next, the sheet was punched into a rectangular shape of 19 mm square so that one set of opposite sides was parallel to a direction of the forming treatment by the hand roller to obtain a positive electrode active material layer of this Comparative Example. Incidentally, the positive electrode active material layer thus obtained was firmly hardened to such an extent that the shape was not broken even when the positive electrode active material layer was placed on a glass plate and moved. In addition, the thickness of the positive electrode active material layer (measured with a micrometer) was 80 µm and uniform and had a smooth surface.

### <Evaluation of positive electrode active material layer>

### (Evaluation of orientation of fibrous binder and fibrous conductive aid)

For each of the positive electrode active material layers produced in Example 1 or Comparative Example 1 described above, orientations of a fibrous binder and a fibrous conductive aid in plan view of the active material layer were evaluated by the following method.

First, a cross section parallel to the main surface of the obtained positive electrode active material layer was observed using a scanning electron microscope (SEM) to acquire an observation image.

Subsequently, the presence of a fibrous binder (PTFE) was detected by mapping a fluorine (F) element in the observation image acquired above by an energy dispersive X-ray analysis (EDX) method. Similarly, a carbon (C) element was mapped by the EDX method to detect the presence of a fibrous conductive aid as a difference from the fibrous binder (PTFE). Incidentally, the size of the visual field (photographing magnification) at the time of acquiring an observation image by SEM was adjusted so that 100 or more fibrous binders and 100 or more fibrous conductive aids were contained in one visual field. In addition, here, the EDX method was used to detect the presence of the binder, but if the same result is obtained, the presence of the binder may be detected by performing mapping using another method such as AES (Auger electron spectroscopy) or EPMA (electron probe microanalysis).

The mapping data obtained as described above was input to an image processing apparatus. For 100 or more of each of the observed fibrous binders and the observed fibrous conductive aids, a direction of the rolling treatment with a roll press machine or a hand roller (Y direction shown in Fig. 6) was taken as a reference direction and an angle θ [°] formed by the reference direction was measured. Here, in the measurement of θ for each of the fibrous binders and the fibrous conductive aids, as shown in Fig. 8, an absolute value of an angle formed by a line segment connecting a start point and an end point at which a fibrous binder and a fibrous conductive aid can be observed in an observation image (fibrous binder 31 in Fig. 8) with the above reference direction was measured. Then, an arithmetic average value of the above angles θ of all the fibrous binders and the fibrous conductive aids to be observed was calculated for each of the fibrous binder and the fibrous conductive aid and taken as an orientation rate [°]. As a result, the orientation rate of Example 1 in which the fibrous binders and the fibrous conductive aids were oriented in the Y direction was 20 [°] for both the fibrous binder and the fibrous conductive aid. On the other hand, the orientation rate of Comparative Example 1 in which the fibrous binders and the fibrous conductive aids were randomly oriented was 45 [°] for both the fibrous binder and the fibrous conductive aid.

### (Measurement of mechanical strength)

Using a test piece obtained by punching the positive electrode active material layer produced in Example 1 or Comparative Example 1 described above into a dumbbell shape, the tensile strength in the flow direction (Y direction) of the rolling treatment was measured in accordance with JIS K 7161:2014 (Plastics - Determination of tensile properties). As a result, the tensile strength of the positive electrode active material layer produced in Example 1 was 1.9 times the tensile strength of the positive electrode active material layer produced in Comparative Example 1.

### <Production Example of evaluation cell>

### (Production of solid electrolyte layer)

In a glove box in an argon atmosphere with a dew point of -68°C or lower, 95 parts by mass of an argyrodite type sulfide solid electrolyte (Li₆PS₅Cl) as a solid electrolyte and a binder solution (a solution obtained by dissolving 5 parts by mass of styrene-butadiene rubber (SBR) as a binder in mesitylene as a solvent) were mixed to prepare a solid electrolyte slurry. The obtained solid electrolyte slurry was applied onto a surface of a stainless-steel foil as a support using an applicator, dried, and then punched into a rectangular shape of 25 mm square to obtain a solid electrolyte layer having a thickness of 40 µm.

### (Production of negative electrode intermediate layer)

Silver nanoparticles and carbon black nanoparticles were weighed so that the mass ratio was 1 : 3, and mixed. Five parts by mass of the obtained mixture was added to and mixed with a binder solution (a solution obtained by dissolving 0.5 parts by mass of styrene-butadiene rubber (SBR) as a binder in mesitylene as a solvent) to prepare a negative electrode intermediate layer slurry. The obtained negative electrode intermediate layer slurry was applied onto a surface of a stainless-steel foil as a negative electrode current collector using an applicator, dried, and then punched into a rectangular shape having a diameter of 21 mm to obtain a negative electrode intermediate layer having a thickness of 10 µm.

### (Production of evaluation cell)

The positive electrode active material layer produced in Example 1 or Comparative Example 1 described above was overlaid on an aluminum foil (rectangular shape of 19 mm square) as a positive electrode current collector. Then, the solid electrolyte layer formed on the surface of the stainless-steel foil produced above was transferred to an exposed surface of this positive electrode active material layer by cold isostatic pressing (CIP) so that an exposed surface of the solid electrolyte layer faced the positive electrode active material layer. Thereafter, the above stainless-steel foil was peeled off, and the negative electrode intermediate layer formed on the surface of the stainless-steel foil produced above was overlaid on the exposed surface of the solid electrolyte layer so that an exposed surface of the negative electrode intermediate layer faced the solid electrolyte layer, and was pressurized by cold isostatic pressing (CIP) to obtain an evaluation cell (lithium deposition type all-solid-state lithium secondary battery).

### <Evaluation of evaluation cell>

A positive electrode lead and a negative electrode lead were connected to each of the positive electrode current collector and the negative electrode current collector of the evaluation cell produced above, and one cycle of charge and discharge was performed according to the following charge-discharge test conditions. At this time, the following charge-discharge test was performed while applying a restraint pressure of 3 MPa in a laminating direction of the evaluation cell using a pressure member.

### (Charge-discharge test conditions)

### 1) Charge-discharge conditions

[Voltage range] 3.0 to 4.3 V
[Charging process] CCCV (0.01 C cut-off)
[Discharging process] CC
[Charge-discharge rate] 0.1 C

### (Stop for 30 minutes each after charge and discharge)

### 2) Evaluation temperature: 298 K (25°C).

The evaluation cell was charged from 3.0 V to 4.3 V (0.01 C cut-off) at the above charge-discharge rate in a constant current/constant voltage (CCCV) mode in a charging process (lithium metal is deposited on the negative electrode current collector) in a thermostatic bath set at the above evaluation temperature using a charge-discharge tester. Thereafter, in a discharging process (lithium metal on the negative electrode current collector is dissolved), a constant current (CC) mode was set, and the evaluation cell was discharged from 4.3 V to 3.0 V at the above charge-discharge rate. Here, 1 C is a current value at which the battery is fully charged (100% charged) when charged at the current value for 1 hour. Then, the charge-discharge efficiency was calculated as a ratio of discharge capacity (0.1 C) to charge capacity (0.1 C). As a result, no significant difference was found between the measured value of the discharge capacity (0.1 C) and the calculated value of the charge-discharge efficiency for the evaluation cells of Example 1 and Comparative Example 1.

From the above results, it is found that, according to the present invention, it is possible to improve the mechanical strength of the secondary battery while suppressing adverse effects on battery characteristics such as discharge capacity and charge-discharge efficiency at a minimum. This is considered to be because the electrode active material layer contains a fibrous binder, and an orientation of the fibrous binder is aligned along a direction parallel to a pair of opposite sides of the power generating element of the rectangular shape, so that occurrence of a region where the strength cannot be locally controlled is suppressed. In addition, it was also supported that the electrode active material layer having the above configuration can be easily produced by the production method using a roll press machine as shown in Example 1.

### Reference Signs List

- 10a: Laminate type battery
- 11': Negative electrode current collector
- 11": Positive electrode current collector
- 13: Negative electrode active material layer
- 15: Positive electrode active material layer
- 17: Solid electrolyte layer
- 19: Single battery layer
- 21: Power generating element
- 25: Negative electrode current collecting plate
- 27: Positive electrode current collecting plate
- 29: Laminate film
- 30, 31: Fibrous binder
- 33: Fibrous conductive aid
- 100: Powder composition (electrode mixture)
- 100': Temporary formed body
- 110: Roll
- 200: Base material
- 210: Base material conveyance unit
- 210a: Placement portion
- 210b: Drive portion

## Claims

1. A secondary battery comprising
a power generating element formed by laminating an electrode including an electrode active material layer containing an electrode active material disposed on a surface of a current collector and a solid electrolyte layer containing a solid electrolyte, and having a rectangular shape consisting of four sides in plan view, wherein
the electrode active material layer includes a binder-oriented active material layer in which a fibrous binder is contained and when the electrode active material layer is viewed in plan view, an orientation rate of the fibrous binder for a direction parallel to one set of opposite sides of the rectangular shape or a direction perpendicular to the opposite sides is smaller than 45°.

2. The secondary battery according to claim 1, wherein an orientation rate of the fibrous binder for a thickness direction of the binder-oriented active material layer is smaller than 45° in a cross section in a thickness direction of the binder-oriented active material layer.

3. The secondary battery according to claim 1 or 2, wherein an orientation rate of the fibrous binder for a direction parallel to one set of opposite sides of the rectangular shape or a direction perpendicular to the opposite sides in the binder-oriented active material layer is 40° or less.

4. The secondary battery according to claim 1 or 2, wherein the binder-oriented active material layer further contains a fibrous conductive aid, and an orientation rate of the fibrous conductive aid for an orientation direction of the fibrous binder is smaller than 45°.

5. The secondary battery according to claim 1 or 2, wherein a current collecting plate is electrically connected to at least one of one set of opposite sides perpendicular to an orientation direction of the fibrous binder of the electrode including the binder-oriented active material layer.

6. The secondary battery according to claim 1 or 2, wherein the power generating element includes two or more of the binder-oriented active material layers, and two or more of the binder-oriented active material layers are disposed in the power generating element so that orientation directions of the fibrous binders in at least two of the binder-oriented active material layers coincide with each other.

7. The secondary battery according to claim 1 or 2, wherein the power generating element includes two or more of the binder-oriented active material layers, and two or more of the binder-oriented active material layers are disposed in the power generating element so that orientation directions of the fibrous binders in at least two of the binder-oriented active material layers are orthogonal to each other.

8. The secondary battery according to claim 1 or 2, which is an all-solid-state lithium secondary battery.

9. A method for producing an electrode active material layer for use in the secondary battery according to claim 1, the method comprising:
a forming step of supplying a powder composition containing the electrode active material, the solid electrolyte, and a fibrous binder to a roll press machine, and performing a rolling treatment on the powder composition using the roll press machine to form the powder composition into a sheet shape, thus obtaining the electrode active material layer.

10. A method for producing an electrode active material layer for use in the secondary battery according to claim 2, the method comprising:
a temporary forming step of performing a spreading treatment on a powder composition containing the electrode active material, the solid electrolyte, and a fibrous binder to obtain a temporary formed body in which the fibrous binder is oriented; and
a forming step of supplying the temporary formed body to a roll press machine, and performing a rolling treatment on the temporary formed body using the roll press machine to form the temporary formed body into a sheet shape, thus obtaining the electrode active material layer, wherein the temporary formed body is supplied to the roll press machine so that a direction of an orientation of the fibrous binder in the temporary formed body is substantially the same as a thickness direction of the electrode active material layer.
